# EUROPÄISCHE PATENTSCHRIFT

(11) **EP 2 233 729 B1**
(45) Veröffentlichungstag und Bekanntmachung des Hinweises auf die Patenterteilung: **21.09.2011**
(21) Anmeldenummer: 10155196.8
(22) Anmeldetag: 02.03.2010
(51) Int. Cl.: F02M 25/07, F16K 1/16, F16K 1/22, F16K 11/22

(54) **Klappenvorrichtung für eine Verbrennungskraftmaschine**
Flap device for a combustion engine
Dispositif de clapets pour un moteur à combustion interne

(30) Priorität: 11.03.2009 DE 102009012211
(43) Veröffentlichungstag der Anmeldung: 29.09.2010
(73) Patentinhaber: Pierburg GmbH, 41460 Neuss (DE)
(72) Erfinder: Simons, Norbert, 40233 Düsseldorf (DE)
(74) Vertreter: Patentanwälte ter Smitten

(56) Entgegenhaltungen:
- WO-A1-2006/076938
- WO-A1-2007/017645
- WO-A1-2008/035670
- DE-A1-102005 002 266
- US-A- 1 937 597
- US-A- 4 917 350
- US-A- 5 741 180
- US-A1- 2002 148 512
- US-A1- 2003 234 378

## Beschreibung

Die Erfindung betrifft eine Klappenvorrichtung für eine Verbrennungskraftmaschine mit einem Gehäuse, welches zumindest einen Kanal bildet und in dem ein erster und ein zweiter Ventilsitz ausgebildet sind, einem ersten Klappenkörper, der im geschlossenen Zustand gegen den ersten Ventilsitz anliegt, einem zweiten Klappenkörper, die im geschlossenen Zustand gegen den zweiten Ventilsitz anliegt, einer ersten Welle, an der der erste Klappenkörper exzentrisch direkt oder indirekt befestigt ist und die im Gehäuse gelagert ist, einer zweiten Welle, an der der zweite Klappenkörper direkt oder indirekt befestigt ist und die parallel zur ersten Welle im Gehäuse gelagert ist und einem Stellantrieb, über den die erste und die zweite Welle gemeinsam drehbar sind.

Derartige Klappenvorrichtungen sind z.B. aus US 2002/148512 A1, US 1937597A, US 5741180A oder WO 2007/017645 A1 bekannt und werden beispielsweise als gekoppeite Klappen in Abgassystemen moderner turboaufgeladener Verbrennungsmotoren verwendet. Dabei dient eine der Klappen als Abgasklappe zur Erhöhung des Druckes, wodurch die Abgasrückführrate erhöht werden kann und die andere Klappe als Abgasrückführklappe zur Dosierung des zum Saugrohr zurückgeführten Abgases.

Eine derartige Kombination ist beispielsweise aus der DE 10 2005 002 266 A1 bekannt. Die Abgasklappe ist dabei als zentrisch auf der Welle angeordnete Klappe ausgebildet, während die Abgasrückführklappe exzentrisch über einen Hebelarm mit der Antriebswelle derart verbunden ist, dass eine geringe Bewegung der Klappe zur Welle möglich bleibt, um eine Doppelpassung beim Antrieb der beiden Klappen über ein Hebelgestänge und eine gemeinsame Steileinheit zu vermeiden.

Nachteilig an einer derartigen Kopplung zweier Klappen ist jedoch, dass durch die Strömung auch außerhalb der Verstellzeiten immer ein relativ großes Drehmoment bzw. eine Kraft auf den Stellantrieb wirkt, die, um die Klappen in der angesteuerten Position zu halten, durch eine vom stellantrieb aufgebrachte Kraft ausgeglichen werden muss. Bei Verwendung eines elektrischen Stellers bedeutet dies einen zusätzlichen Stromverbrauch, der sich negativ auf den Kraftstoffverbrauch des Fahrzeugs auswirkt.

Es stellt sich daher die Aufgabe, eine Klappenvorrichtung mit zwei gekoppelten Klappen zu schaffen, bei der möglichst in jeder Stellung der beiden Klappen ein auf den Stellantrieb wirkendes Drehmoment aufgrund der auftretende Strömungsverhältnisse möglichst klein gehalten wird oder vollständig verhindert wird.

Diese Aufgabe wird dadurch gelöst, dass der zweite Klappenkörper direkt oder indirekt exzentrisch an der zweiten parallelen Welle befestigt ist, wobei sich die beiden Klappenkörper im geschlossenen Zustand in einer gemeinsamen Ebene zu entgegengesetzten Richtungen von der ersten und zweiten Welle erstrecken und wobei die Drehung der beiden Wellen über den Stellantrieb synchron in gleicher Drehrichtung erfolgt. Bei einer derartigen Anordnung und Ausbildung der beiden Klappen wirkt auf jede der Klappen in jeder Stellung der Klappen eine Kraft. Daraus folgt, dass auf die beiden Wellen ein Drehmoment in unterschiedlicher Richtung wirkt, so dass lediglich die Differenz der beiden Drehmomente aiso das resultierende Drehmoment, welches bei unterschiedlichen vorhandenen Kraftangriffsflächen bei unterschiedlich großen Klappenkörpern auftritt, über den Steilantrieb als Haltekraft aufgebracht werden muss. Entsprechend können kleinere Stellantriebe verwendet werden.

In einer besonders bevorzugten Ausführung weisen der erste und der zweite Klappenkörper die gleichen Außenmaße auf, so dass das resultierende Drehmoment und somit die aufzubringende Haltekraft nahezu Null ist.

Vorzugsweise ist auf den Enden der ersten und der zweiten Welle jeweils ein Zahnrad angeordnet, wobei die beiden Zahnräder mit einem auf einer Antriebswelle angeordneten Antriebszahnrad des Stellantriebs kämmen. Durch diese Anordnung entsteht eine besonders platzsparende sowie einfach und somit kostengünstig herzustellende Klappenvorrichtung.

In einer bevorzugten Ausbildung der Erfindung sind im Kanal Einbauten ausgebildet, die den Kanal im Querschnitt im Bereich der Wellen in zwei Hälften teilen und an denen ein Teil der Ventilsitze ausgebildet ist. Hierdurch kann eine vollständige Dichtigkeit der Klappen in ihrer geschlossenen Stellung erreicht werden. Gleichzeitig wird es möglich, ein derartiges System beispielsweise bei einer dezentralen Rückführung von Abgas in zwei nebeneinander liegende Einzelsaugrohre zu verwenden.

In einer weiterführenden Ausgestaltung der Erfindung umgeben die Einbauten die erste Welle in ihrem strömungsabwartigen Bereich und die zweite Welle in ihrem strömungsaufwärtigen Bereich, so dass Leckagen im Bereich der Wellendurchführung durch das Gehäuse minimiert werden, da in diesen Bereichen nur eine geringe Strömung vorliegt.

Vorzugsweise ist zumindest einer der Ventilsitze flexibel ausgebildet, wodurch eine Doppelpassung vermieden wird und somit ein zuverlässiger Anschlag beider Klappen am Ventilsitz in ihrer geschlossenen Stellung auch bei relativ großen Fertigungstoleranzen erreicht werden kann.

Alternativ ist zumindest einer der Klappenkörper zur Welle beweglich oder flexibel ausgeführt. Dies kann beispielsweise durch Befestigung der Klappe an der Welle oder einem mit der Welle verbundenen Hebel nach dem Wackeltellerprinzip erfolgen, bei dem die Klappe beispielsweise über einen Kugelkopf an einem Hebel befestigt wird.

In einer Weiterbildung der Erfindung ist der Kanal in Strömungsrichtung hinter den Klappen in zwei getrennte Kanäle aufgeteilt, so dass auch eine voneinander abhängige Steuerung einer Strömung durch zwei getrennte, folgende Kanäle ermöglicht wird.

Es wird somit eine einfach aufgebaute Klappenvorrichtung geschaffen, bei der kein durch Strömungskräfte auftretendes Drehmoment auf den gemeinsamen Stellantrieb wirkt. Entsprechend kann ein antreibender Elektromotor kleiner gewählt werden und Energie und somit Kraftstoff eingespart werden. Gleichzeitig wird eine hohe Dichtigkeit bei geschlossener Stellung der Klappen sichergesteilt.

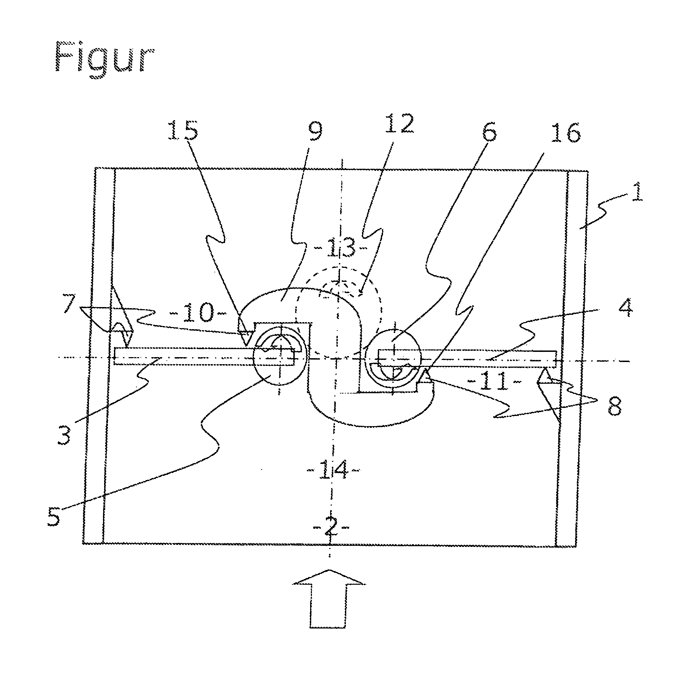

Ein Ausführungsbeispiel einer erfindungsgemäßen Klappenvorrichtung ist in der Figur schematisch in Seitenansicht dargestellt und wird nachfolgend beschrieben.

Die erfindungsgemäße Klappenvorrichtung besteht aus einem Gehäuse 1, welches einen Kanal 2 begrenzt. Im Kanal 2 sind ein erster Klappenkörper 3 und ein zweiter Klappenkörper 4 angeordnet, die exzentrisch an einer ersten Welle 5 beziehungsweise einer zweiten Welle 6 befestigt sind. Die beiden Klappenkörper 3, 4 weisen in dieser Ausführung die gleichen Außenmaße auf. Im dargestellten Ausführungsbeispiel erfolgt diese Befestigung der Klappenkörper 3, 4 an den Wellen 5, 6 direkt an einer Seite des Klappenumfangs. Selbstverständlich wäre es auch möglich, die Klappenkörper 3, 4 über einen Hebei, der beispielsweise von der jeweiligen Welle 5, 6 zur Klappenmitte verläuft, mit den Wellen 5, 6 zu verbinden, wobei diese Verbindung flexibel, beispielsweise über einen Kugelkopf am Hebel und einer korrespondierenden Pfanne am Klappenkörper erfolgen kann.

Im dargestellten, den Kanal 2 verschließenden Zustand der Klappenkörper 3, 4 liegen diese gegen einen ersten Ventilsitz 7 beziehungsweise einen zweiten Ventilsitz 8 an, welche im vorliegenden Ausführungsbeispiel flexibel ausgeführt sind, um eine Doppelpassung zu vermeiden. Die Klappenkörper 3, 4 liegen dabei in einer gemeinsamen Querschnittsebene des Kanals 2, wobei sich die Klappenkörper 3, 4 von den beiden parallel zueinander angeordneten Wellen 5, 6 in entgegengesetzter Richtung zu den gegenüberliegenden Wänden des Gehäuses 1 erstrecken. An den Wänden des Gehäuses 1 sind Teile der Ventilsitze 7, 8 ausgebildet.

Im Bereich der Mittelachse des Kanals 2 befinden sich Einbauten 9, die den Querschnitt des Kanals 2 im Bereich der Wellen 5, 6 in zwei gleich große Teilkanäle 10, 11 unterteilt, von denen der erste Teilkanal 10 durch den ersten Klappenkörper 3 und der zweite Teilkanal 11 durch den zweiten Klappenkörper 4 beherrscht wird. An diesen Einbauten 9 sind auch Teile 15, 16 der Ventilsitze 7, 8 ausgebildet, die nicht im Bereich des Gehäuses 1 ausgebildet werden können. Werden beilspielsweise zwei jeweils halbkreisförmige Klappenkörper 3, 4 verwendet, so ist die Befestigung der Klappenkörper 3, 4 an den Wellen 5, 6 im Bereich der Geraden des jeweiligen Klappenumfangs. Entsprechend wäre auch der korrespondierende Teil 15, 16 der Ventilsitze 7, 8 als Gerade an den Einbauten 9 vorzusehen, während der andere, halbkreisförmige Teil im Bereich des Gehäuses 1 vorzusehen wäre.

Wie aus der Figur ersichtlich ist, öffnet der erste Klappenkörper 3 entgegen der Strömungsrichtung, während der Klappenkörper 4 in Strömungsrichtung öffnet. Entsprechend weisen auch die Ventilsitze 7, 8 in entgegengesetzte Richtungen. Die Einbauten 9 erstrecken sich entsprechend in einem stromabwärtigen Bereich 13 von der Mittelachse um die erste Welle 5 zum Klappenkörper 3 und im stromaufwärtigen Bereich 14 um die zweite Welle 6 zum Klappenkörper 4. Dies ermöglicht nicht nur die Anordnung der entsprechenden Teile der Ventilsitze 7, 8 an den Einbauten 9, sondern bewirkt gleichzeitig, dass der Durchtritt der Wellen 5, 6 abgeschirmt wird. Im Bereich der Durchtritte ist die vorliegende Strömungsgeschwindigkeit des strömenden Mediums durch die entsprechend ausgeformten Einbauten 9 sehr klein, so dass diese eine abdichtende Wirkung besitzen.

Wie bereits angedeutet, besteht zumindest ein Durchtritt jeder Welle 5, 6 durch das Gehäuse 1. Wie in der Figur durch strichpunktierte Linien angedeutet, sind im Außenbereich des Kanals 2 die beiden Enden der Wellen 5, 6 mit einer gemeinsamen Antriebswelle 12 gekoppelt, die beispielsweise die angetriebene Welle eines nicht dargestellten Elektromotors sein kann, der gemeinsam mit der Antriebswelle 12 einen nicht näher dargestellten Stellantrieb im Sinne der Erfindung bildet. Ais einfache Variante wäre es möglich, auf den Enden der Wellen 5, 6 jeweils ein Zahnrad drehfest anzuordnen, wobei diese beiden Zahnräder dann mit einem auf der Antriebswelle 12 angeordneten Antriebszahnrad kämmen würden.

Bei einer derartigen Kopplung entsteht bei Betätigung des Stellantriebs eine Übertragung der Drehbewegung der Antriebswelle 12 auf die Wellen 5, 6 entsprechend der gewählten Übersetzung. Dies hat zur Folge, dass die Wellen 5, 6 in gleicher Drehrichtung bewegt werden, wodurch wiederum der Klappenkörper 3 in stromaufwärtiger Richtung gedreht wird und der Klappenkörper 4 in stromabwärtiger Richtung gedreht wird.

Es wird zeitlich, dass in jeder Stellung der Klappenkörper 3, 4 im Kanal 2 die angeströmte Fläche der Klappenkörper 3, 4 gleich groß ist. Da auch die vorliegende Strömungskraft gleich ist, wirkt ein gleiches Drehmoment auf beide Wellen 5, 6. Da jedoch der erste Klappenkörper 3 in seiner Schlieβrichtung durch die Strömung belastet wird und der zweite Klappenkörper 4 in seiner Öffnungsrichtung durch die Strömungskräfte belastet wird, ergibt sich an der Antriebswelle 12 ein Gleichgewicht der auf die Antriebswelle 12 wirkenden Drehmomente, so dass das auf die Antriebseinheit durch die Strömungskräfte wirkende resultierende Drehmoment extrem klein wird. Hierdurch muss auch bei der Verstellung kein Drehmoment entgegen eines resultierenden Drehmomentes aufgebracht werden, so dass der Antrieb des Stellantriebs kleiner gewählt werden kann. Dies verringert den Energiebedarf im Vergleich zu bekannten Ausführungen.

Es sollte deutlich sein, dass eine derartige Klappenvorrichtung beispielsweise in einem Abgassystem als Abgasrückführklappe genutzt werden kann. Auch ist es denkbar, die Unterteilung der beiden Teilkanäle im stromabwärtigen Bereich fortzusetzen und somit zwei unterschiedlichen Kanälen eine gleiche Menge an Medium zuzuteilen. Dies kann beispielsweise für eine Anwendung bei dezentraler Abgasrückführung interessant sein, wobei jedem Einzelsaugrohr das Abgas zu dosiert würde.

Verschiedene Modifikationen der im Ausführungsbeispiel beschriebenen Konstruktion sind ebenfalls im Schutzbereich des Hauptanspruchs denkbar. So können beispielsweise unterschiedlich geformte Kanäle und Klappen verwendet werden oder, wie bereits beschrieben, die Befestigung der Klappen an der Welle in unterschiedlicher Weise erfolgen.

## Patentansprüche

1. Klappenvorrichtung für eine Verbrennungskraftmaschine mit
einem Gehäuse (1), welches zumindest einen Kanal (2) bildet und in dem ein erster Ventilsitz (7) und ein zweiter Ventilsitz (8) ausgebildet sind,
einem ersten Klappenkörper (3), der im geschlossenen Zustand gegen den ersten Ventilsitz (7) anlegt,
einem zweiten Klappenkörper (4), der im geschlossenen Zustand gegen den zweiten Ventilsitz. (8) anlegt,
einer ersten Welle (5), an der der erste Klappenkörper (3) exzentrisch direkt oder indirekt befestigt ist und die im Gehäuse (1) gelagert ist,
einer zweiten Welle (6), an der der zweite Klappenkörper (4) direkt oder indirekt befestigt ist und die parallel zur ersten Welle (5) im Gehäuse (1) gelagert ist und
einem Stellantrieb, über den die erste Welle (5) und die zweite Welle (6) gemeinsam drehbar sind,
**dadurch** gekennzeichet, dass
der zweite Klappenkörper (4) exzentrisch direkt oder inndirekt an der zweiten parallelen Welle (6) befestigt ist, wobei sich die beiden Klappenkörper (3, 4) im geschlossenen Zustand in einer gemeinsamen Ebene zu entgegengesetzten Richtungen von der ersten Welle (5) und zweiten Welle (6) erstrecken und wobei die Drehung der beiden Wellen (5, 6) über den Stellantrieb synchron in gleicher Drehrichtung erfolgt.

2. Klappenvorrichtung für eine Verbrennungskraftmaschine nach Anspruch 1,
**dadurch gekennzeichnet, dass**
der zweite Klappenkörper (4) die gleichen Außenmaße aufweist wie der erste Klappenkörper (3).

3. Klappenvorrichtung für eine Verbrennungskraftmaschine nach Anspruch 1 oder 2,
**dadurch gekennzeichnet, dass**
auf den Enden der ersten Welle (5) und der zweiten Welle (6) jeweils ein Zahnrad angeordnet ist, wobei die beiden Zahnräder mit einem auf einer Antriebswelle (12) angeordneten Antriebszahnrad des Stellantriebs kämmen.

4. Kiappenvorrichtung für eine Verbrennungskraftmaschine nach einem der vorhergehenden Anspruche,
**dadurch gekennzeichnet, dass**
im Kanal (2) Einbauten (9) ausgebildet sind, die den Kanal (9) im Querschnitt im Bereich der Welten (5, 6) in zwei Hälften teilen und an denen ein Teil (15, 16) der Ventilsitze (7, 8) ausgebildet ist.

5. Klappenvorrichtung für eine Verbrennungskraftmaschine nach Anspruch 4,
**dadurch gekennzeichnet, dass**
die Einbauten (9) die erste Welle (5) in ihrem strömungsabwärtigen Bereich (13) umgeben und die zweite Welle (6) in ihren strömungsaufwärtigen Bereich (14) umgeben.

6. Klappenvorrichtung für eine Verbrennungskraftmaschine nach einem der vorhergehenden Ansprüche,
**dadurch gekennzeichnet, dass**
zumindest einer der Ventilsitze (7, 8) flexibel ausgebildet ist,

7. Klappenvorrichtung für eine Verbrennungskraftmaschine nach einem der Ansprüche 5 oder 6,
**dadurch gekennzeichnet, dass**
zumindest einer der Klappenkörper (3, 4) zur Welle (5, 6) beweglich oder flexibel ausgeführt sind.

8. Klappenvorrichtung für eine Verbrennungskraftmaschine nach einem der Ansprüche 4 bis 7,
**dadurch gekennzeichnet, dass**
der Kanal (2) in Strömungsrichtung hinter den Klappen (3, 4) in zwei getrennte Kanäle aufgeteilt ist.

## Claims

1. Flap device for an internal combustion engine comprising
a housing (1) which defines at least one channel (2) and in which a first valve seat (7) and a second valve seat (8) are formed,
a first flap body (3) which in the closed condition abuts against the first valve seat (7),
a second flap body (4) which in the closed condition abuts against the second valve seat (8),
a first shaft (5) on which the first flap body (3) is directly or indirectly fastened in an eccentric manner and which is supported in the housing (1);
a second shaft (6) on which the second flap body (4) is directly or indirectly fastened and which is supported in the housing (1) in parallel with said first shaft (5); and
an actuator via which the first shaft (5) and the second shaft (6) can be rotated together,
**characterized in that**
said second flap body (4) is directly or indirectly fastened on the second parallel shaft (6) in an eccentric manner, wherein said two flap bodies (3, 4), in the closed condition, extend from the first shaft (5) and the second shaft (6) in a common plane, yet in opposite directions, and wherein the rotation of the two shafts (5, 6) is effected synchronously in the same sense of rotation through the actuator.

2. Flap device for an internal combustion engine as defined in claim 1, **characterized in that** the second flap body (4) has the same dimensions as the first flap body (3).

3. Flap device for an internal combustion engine as defined in claim 1 or 2, **characterized in that** the ends of the first shaft (5) and the second shaft (6) are respectively provided with a gear, the two gears meshing with a drive gear of the actuator arranged on a drive shaft (12).

4. Flap device for an internal combustion engine as defined in one of the preceding claims, **characterized in that** fittings (9) are formed in the channel which divide the channel (2) in two halves in the region of the shafts (5, 6) and which are formed with a part (15, 16) of the valve seats (7, 8).

5. Flap device for an internal combustion engine as defined in claim 4, **characterized in that** the fittings (9) surround the first shaft (5) in its downstream portion (13) and surround the second shaft (6) in its upstream portion (14).

6. Flap device for an internal combustion engine as defined in one of the preceding claims, **characterized in that** at least one of the valve seats (7, 8) is flexible.

7. Flap device for an internal combustion engine as defined in claim 5 or 6, **characterized in that** at least one of the flap bodies (3, 4) is made to be movable or flexible with respect to the shaft (5, 6).

8. Flap device for an internal combustion engine as defined in one of claims 4 to 7, **characterized in that** the channel (2) is divided into two separate channels behind the flaps (3, 4), seen in the flow direction.

## Revendications

1. Dispositif à clapets pour un moteur à combustion interne comprenant
un boitier (1) définissant au moins un conduit (2) et dans lequel sont formées une première siège de soupape (7) et une deuxième siège de soupape (8),
un premier corps de clapet (3) qui, en état fermé, est en contact avec ladite première siège de soupape (7),
un deuxième corps de clapet (4) qui, en état fermé, est en contact avec ladite deuxième siège de soupape (8),
un premier arbre (5) sur lequel est monté de manière excentrique, soit directement ou indirectement, ledit premier corps de clapet (3), et qui est supporté dans ledit boitier (1),
un deuxième arbre (6) sur lequel est monté soit directement ou indirectement ledit deuxième corps de clapet (4), et qui est supporté dans ledit boitier (1) en parallèle avec ledit premier arbre (5), et
un actionneur par lequel le premier arbre (5) et le deuxième arbre (6) sont aptes à être tournés ensemble,
**caractérisé en ce que**
ledit deuxième corps de clapet (4) est monté de manière excentrique sur ledit deuxième arbre (6), soit directement ou indirectement, les deux corps de clapet (3, 4), en état fermé, s'étendant dans le même plan, mais dans des directions opposées, à partir dudit premier arbre (5) et dudit deuxième arbre (6), et la rotation des deux arbres (5, 6) étant effectuée de façon synchrone et dans le même sens de rotation par ledit actionneur.

2. Dispositif de clapets pour un moteur à combustion interne selon la revendication 1, **caractérisé en ce que** ledit deuxième corps de clapet (4) a les mêmes dimensions que le premier corps de clapet (3).

3. Dispositif de clapets pour un moteur à combustion interne selon la revendication 1 ou 2, **caractérisé en ce que** les extrémités dudit premier arbre (5) et dudit deuxième arbre (6) sont respectivement prévues d'une roue dentée, les deux roues dentées étant en prise avec une roue dentée d'entrainement dudit actionneur, prévue sur un arbre de transmission (12).

4. Dispositif de clapets pour un moteur à combustion interne selon l'une quelconque des revendications précédentes, **caractérisé en ce que** des structures (9) sont formées dans ledit conduit (2) partageant la section du conduit (2) dans deux moitiés dans la région des arbres (5, 6), une partie (15, 16) des sièges de soupape (7, 8) étant formée sur lesdites structures.

5. Dispositif de clapets pour un moteur à combustion interne selon la revendication 4, **caractérisé en ce que** lesdites structures (9) entourent ledit premier arbre (5) dans sa région aval (13) et entourent ledit deuxième arbre (6) dans sa région amont (14).

6. Dispositif de clapets pour un moteur à combustion interne selon l'une quelconque des revendications précédentes, **caractérisé en ce qu'**au moins une des sièges de soupape (7, 8) est flexible.

7. Dispositif de clapets pour un moteur à combustion interne selon la revendication 5 ou 6, **caractérisé en ce qu'**au moins un des corps de clapet (3, 4) est déplaçable et flexible par rapport à l'arbre (5, 6).

8. Dispositif de clapets pour un moteur à combustion interne selon l'une quelconque des revendications 4 à 7, **caractérisé en ce que**, derrière les clapets (3, 4), vu dans la direction d'écoulement, ledit conduit (2) est divisé en deux conduits séparés.
